# EUROPÄISCHE PATENTANMELDUNG

(11) **EP 1 624 385 A1**
(43) Veröffentlichungstag der Anmeldung: **08.02.2006**
(21) Anmeldenummer: 04018494.7
(22) Anmeldetag: 04.08.2004
(51) Int. Cl.: G06F 17/30

(54) **Verfahren zur Navigation in einem hierarchisch organisierten Datenbestand**

(71) Anmelder: SIEMENS AKTIENGESELLSCHAFT, 80333 München (DE)
(72) Erfinder: Pohlan, Rudolf, 76337 Waldbronn (DE)

(57) **Zusammenfassung**

Ein Verfahren zur Navigation in einem hierarchisch organisierten und in Datenbehältern angeordnete Datenobjekte aufweisenden Datenbestand, bei welchem die Datenbehälter und die Datenobjekte ausgehend von einer Wurzel in einer Baumstruktur dargestellt sind, ist dadurch gekennzeichnet, dass ein beliebiger Datenbehälter als Wurzel bestimmbar ist.

## Beschreibung

Die Erfindung betrifft ein Verfahren nach dem Oberbegriff des Anspruchs 1, zur Navigation in einem hierarchisch organisierten und in Datenbehältern angeordnete Datenobjekte aufweisenden Datenbestand, bei welchem die Datenbehälter und die Datenobjekte ausgehend von einer Wurzel in einer Baumstruktur dargestellt sind. Ein derartiges Verfahren ist im Stand der Technik hinlänglich bekannt und wird beispielsweise bei einem unter dem Namen Explorer bekannten Dateimanager der Firma Microsoft verwendet. Bei dem bekannten Dateimanager kann ein Computer-Anwender ausgehend von einer Wurzel wie beispielsweise Desktop oder Arbeitsplatz baumartig durch alle Datenbehälter des Datenbestands unterhalb der Wurzel navigieren, indem er sie per Mausklick öffnet oder wieder schließt.

Nachteilig bei diesem Navigationsprinzip ist die fehlende Möglichkeit, den Navigationsbereich einzuschränken, um einen besseren Überblick zu gewinnen; denn es ist immer nur der gesamte Baum bzw., abhängig von der Größe des Mediums, auf dem der Baum dargestellt wird, ein Teilbereich des Baumes darstellbar. Will man in einem bestimmten Teilbereich des Datenbestandes navigieren, ist es in der Regel erforderlich, den Baum durch Scrollen so zu verschieben, dass der dargestellte Teilbereich des Baumes dem gewünschten Navigationsbereich entspricht. D. h., der Teil des Baumes, in dem der Teil des Datenbestands enthalten ist, in dem man navigieren will, wird dann im so genannten Navigationsfenster dargestellt.

Es ist des Weiteren bekannt, statt der Darstellung des Datenbestands in einer Baumstruktur einzelne Hierarchieebenen des Datenbestandes darzustellen. Durch Doppelklick auf einen Datenbehälter wird jeweils die unterhalb des Datenbehälters angeordnete Hierarchieebene dargestellt. Hierbei kann der Computer-Anwender den Navigationsbereich zwar einschränken, jedoch hat die Darstellung lediglich einer Hierarchieebene den Nachteil, dass nicht erkennbar ist, an welcher Stelle in der Hierarchie der Baumstruktur sich die dargestellte Ebene befindet. Darüber hinaus ist das Wechseln in einen Datenbehälter, der sich in einem anderen Zweig der Baumstruktur befindet, mühsam, da zuvor auf eine mit dem neuen Zweig gemeinsame Ebene in der Hierarchie der Baumstruktur aufgestiegen werden muss, um danach in dem betreffenden Zweig zu der Ebene abzusteigen, in der sich der gewünschte Datenbehälter befindet.

Es ist Aufgabe der Erfindung, ein eingangs genanntes Verfahren derart auszubilden, dass auf einfache Weise aus dem Datenbestand ein Bereich auswählbar ist, in dem auf herkömmliche Weise navigiert werden kann.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Verfahren zur Navigation in einem hierarchisch organisierten und in Datenbehältern angeordnete Datenobjekte aufweisenden Datenbestand, bei welchem die Datenbehälter und die Datenobjekte ausgehend von einer Wurzel in einer Baumstruktur dargestellt sind, dadurch gekennzeichnet, dass ein beliebiger Datenbehälter als Wurzel bestimmbar ist.

Dadurch, dass ein beliebiger Datenbehälter als Wurzel bestimmbar ist, können auf einfache Weise die in der Baumstruktur oberhalb des bestimmten Datenbehälters angeordneten Datenbehälter und Datenobjekte von der Darstellung ausgeblendet werden. Durch Bestimmung eines Datenbehälters als neue Wurzel werden nur noch die Datenbehälter und Datenobjekte dargestellt, die in der Baumstruktur unterhalb des als neue Wurzel bestimmten Datenbehälters angeordnet sind. Innerhalb dieses Datenbestandes kann auf herkömmliche Art und Weise navigiert werden.

Bei dem erfindungsgemäßen Verfahren sind die jeweiligen Vorteile der beiden eingangs genannten Verfahren miteinander verbunden, ohne dass deren Nachteile vorhanden sind.

Abhängig von dem als neue Wurzel bestimmten Datenbehälter, also von einem beliebigen Einstiegspunkt, werden alle Datenbehälter und Datenobjekte des Einstiegsdatenbehälters im Navigationsfenster angeboten. Durch das Navigationsfenster ist der Arbeitsbereich definiert, innerhalb dem navigiert werden kann. Innerhalb des Navigationsfensters kann über die Datenbehälter und Datenobjekte auf herkömmliche Weise baumartig navigiert werden, indem Datenbehälter geöffnet oder geschlossen sowie Datenobjekte für deren Bearbeitung ausgewählt werden.

Das Vergrößern bzw. Erweitern des Arbeitsbereichs um in der Hierarchie übergeordnete Datenbehälter und Datenobjekte wird erreicht, indem die übergeordnete Ebene in das Navigationsfenster aufgenommen wird. Dies kann dadurch geschehen, dass ein übergeordneter Datenbehälter als neue Wurzel bestimmt wird. Das Verkleinern bzw. Einschränken des Arbeitsbereichs auf hierarchisch unterlagerte Datenbehälter und Datenobjekte wird erreicht, indem ein sich in einer unteren Ebene befindlicher Datenbehälter als neue Wurzel bestimmt wird. Hierdurch definieren nur noch dessen unterlagerte Datenbehälter sowie Datenobjekte den neuen Arbeitsbereich und werden im Navigationsfenster dargestellt. In dem erweiterten bzw. eingeschränkten Arbeitsbereich, der im Navigationsfenster dargestellt ist, kann auf herkömmliche Weise baumartig navigiert werden.

Bei einer besonderen Ausführungsform der Erfindung ist vorgesehen, dass Datenbehälter und/oder Datenobjekte in der Darstellung im Navigationsfenster unterdrückbar sind. Hierbei ist es besonders vorteilhaft, wenn die Unterdrückung für jeden Datenbehälter und/oder für jedes Datenobjekt individuell frei wählbar ist. Durch die manuelle Auswahl von Datenbehältern und Datenobjekten hat man einen sehr großen Freiheitsgrad, den Arbeitsbereich bzw. das Navigationsfenster individuell einzuschränken.

Die Unterdrückung kann aber auch mittels eines individuell frei wählbaren Kriteriums erfolgen, welches eine Mehrzahl von Datenbehältern und/oder Datenobjekten betreffen kann, wie dies in einer weiteren besonderen Ausführungsform der Erfindung vorgesehen ist. So kann die Unterdrückung beispielsweise durch eine Filterfunktion erfolgen, welche gleiche Namensbestandteile als Filterkriterium enthält. Als Filterkriterium können aber auch beispielsweise bestimmte Typen von Datenbehältern und Datenobjekten verwendet werden.

Sehr vorteilhaft ist auch eine Ausführungsform der Erfindung, bei der Datenbehälter und/oder Datenobjekte von der Bestimmbarkeit bzw. Wählbarkeit ausnehmbar sind. Hierdurch lässt sich jeder Datenbehälter bzw. jedes Datenobjekt durch entsprechende Zugriffsrechte schützen.

Als äußerst vorteilhaft hat sich eine Ausführungsform der Erfindung erwiesen, bei der die Datenorganisation wenigstens noch eine hierarchisch angeordnete Parallelstruktur enthält. Hierdurch wird die Datenorganisation von einer zweidimensionalen Struktur um eine weitere Dimension auf eine dreidimensionale Struktur erweitert. Jeder Datenbehälter kann hierbei neben den in der Grundstruktur enthaltenen hierarchisch untergeordneten Datenbehältern und Datenobjekten noch Datenbehälter und Datenobjekte in einer Parallelstruktur oder mehreren Parallelstrukturen enthalten.

Ausgehend von einem bestimmten Datenbehälter kann im Navigationsfenster ausgewählt werden, ob eine bzw. welche Parallelstruktur in den Arbeitsbereich einbezogen werden soll. Hierdurch lässt sich die im Navigationsfenster dargestellte Informationsdichte auf einfache Weise erhöhen bzw. verringern.

Neben der Navigation in dem hierarchisch aufgebauten Datenbestand der Grundstruktur kann somit noch in einem hierarchisch aufgebauten Datenbestand einer Parallelstruktur navigiert werden. Die Parallelstruktur kann zusätzlich zur Grundstruktur oder anstelle der Grundstruktur im Navigationsfenster dargestellt werden. Innerhalb des so gebildeten Navigationsfensters kann dann auf die zuvor beschriebene erfindungsgemäße Art und Weise navigiert werden.

Mittels des erfindungsgemäßen Navigationsverfahrens ist es in vorteilhafter Weise möglich, einerseits auf bekannte Art und Weise von einer definierten Wurzel aus baumartig zu navigieren und andererseits sich in den Hierarchieebenen aufwärts und abwärts zu bewegen, wobei die Möglichkeit des baumartigen Navigierens erhalten bleibt. Durch die Bildung und Darstellung von zu der Grundstruktur zusätzlichen Parallelstrukturen wird des Weiteren eine neue Dimension in der hierarchischen Datennavigation eröffnet. Das erfindungsgemäße Navigationsverfahren ermöglicht dem Benutzer in vorteilhafter Weise das Einrichten eines beliebig ausgewählten Arbeitsbereichs im Navigationsfenster.

Mittels des erfindungsgemäßen Navigationsverfahrens lässt sich in hervorragender Weise beispielsweise durch den Datenbestand eines Unternehmens abhängig vom Arbeitsbereich eines Mitarbeiters navigieren. Ein weiterer Anwendungsbereich, für den sich das erfindungsgemäße Navigationsverfahren hervorragend eignet, ist das Verwalten von Engineering-Daten industrieller Anlagen. Selbstverständlich lässt sich das erfindungsgemäße Navigationsverfahren auch als allgemeiner Dateimanager (File-Browser/Explorer) verwenden. Das erfindungsgemäße Navigationsverfahren lässt sich nahezu bei allen Software-Werkzeugen verwenden, welche insbesondere verteilte Datenbestände einer Organisationseinheit hierarchisch verwalten.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigen:
- Figur 1: eine Anordnung einer hierarchischen Verwaltung von Datenbehältern und Datenobjekten mit einer Grundstruktur und zwei Parallelstrukturen,
- Figur 2: eine mögliche Realisierung der in Figur 1 dargestellten Anordnung,
- Figur 3: ein Navigationsfenster, in dem die Grundstruktur der in Figur 1 dargestellten Anordnung mit der Wurzel (Arbeitsbereich) C dargestellt ist sowie eine oberhalb des Navigationsfensters angeordnete Schaltflächenleiste mit für die Anwendung des erfindungsgemäßen Verfahrens erforderlichen Schaltflächen,
- Figur 4: ein Beispiel für die Anwendung des Bedienschritts "Arbeitsbereich erweitern",
- Figur 5: ein Beispiel für die Anwendung des Bedienschritts "Arbeitsbereich einschränken",
- Figur 6: ein Beispiel für die Anwendung des Bedienschritts "untergeordnete Datenbehälter und Datenobjekte der angrenzenden Parallelstruktur eines Datenbehälters einbeziehen",
- Figur 7: ein Beispiel für die Anwendung des Bedienschritts "untergeordnete Datenbehälter und Datenobjekte der entferntesten Parallelstruktur eines Datenbehälters ausblenden",
- Figur 8: ein Beispiel für die Anwendung des Bedienschritts "Datenbehälter und Datenobjekte der nächstfolgenden Parallelstruktur darstellen",
- Figur 9: ein Beispiel für die Anwendung des Bedienschritts "Datenbehälter und Datenobjekte der vorhergehenden Parallelstruktur darstellen" und
- Figur 10: ein Beispiel für die Anwendung des Bedienschritts "Datenbehälter und/oder Datenobjekte auswählen".

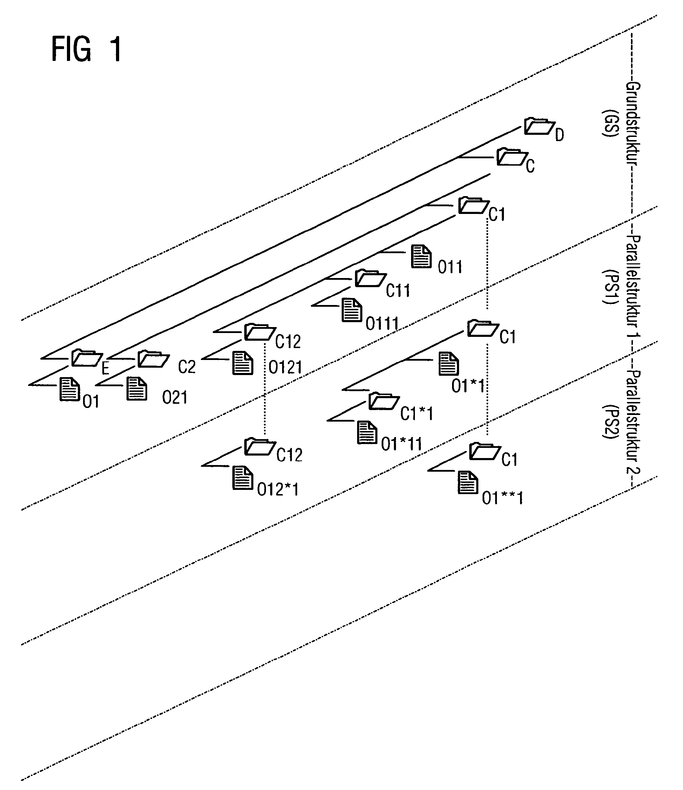

Wie Figur 1 entnommen werden kann, weist ein hierarchisch organisierter Datenbestand einen Datenbehälter D auf, welcher die oberste Ebene und damit die Wurzel des in einer Baumstruktur dargestellten Datenbestandes bildet. Unterhalb des Datenbehälters D ist ein Datenbehälter C angeordnet, welcher seinerseits einen ersten untergeordneten Datenbehälter C1 und einen zweiten untergeordneten Datenbehälter C2 aufweist. Der erste Datenbehälter C1 weist seinerseits einen ersten untergeordneten Datenbehälter C11 und einen zweiten untergeordneten Datenbehälter C12 sowie ein erstes untergeordnetes Datenobjekt O11 auf. Der Datenbehälter C11 weist ein Datenobjekt O11 auf. Der Datenbehälter C12 weist ein Datenobjekt O121 auf. Der Datenbehälter C2 weist ein Datenobjekt 021 auf.

Unterhalb des Datenbehälters D ist weiterhin ein Datenbehälter E angeordnet, welcher ein Datenobjekt O1 enthält.

Die bisher genannten Datenbehälter sowie Datenobjekte bilden die Grundstruktur GS des Datenbestandes. Parallel zur Grundstruktur GS ist eine erste Parallelstruktur PS1 und eine zweite Parallelstruktur PS2 angeordnet. In den Parallelstrukturen PS1, PS2 sind weitere Datenbehälter und Datenobjekte angeordnet, welche Datenbehältern der Grundstruktur GS untergeordnet sind.

So ist dem Datenbehälter C1 in der ersten Parallelstruktur PS1 ein Datenobjekt O1*1 und ein Datenbehälter C1*1, welcher seinerseits ein Datenobjekt O1*11 aufweist, untergeordnet. Dem Datenbehälter C12 ist in der ersten Parallelstruktur PS1 ein Datenobjekt O12*1 zugeordnet.

Dem Datenbehälter C1 ist in der zweiten Parallelstruktur PS2 ein Datenobjekt O1**1 zugeordnet.

Selbstverständlich könnten auch dem Datenbehälter C11 in der ersten, zweiten oder einer weiteren Parallelstruktur Datenbehälter oder Datenobjekte zugeordnet sein.

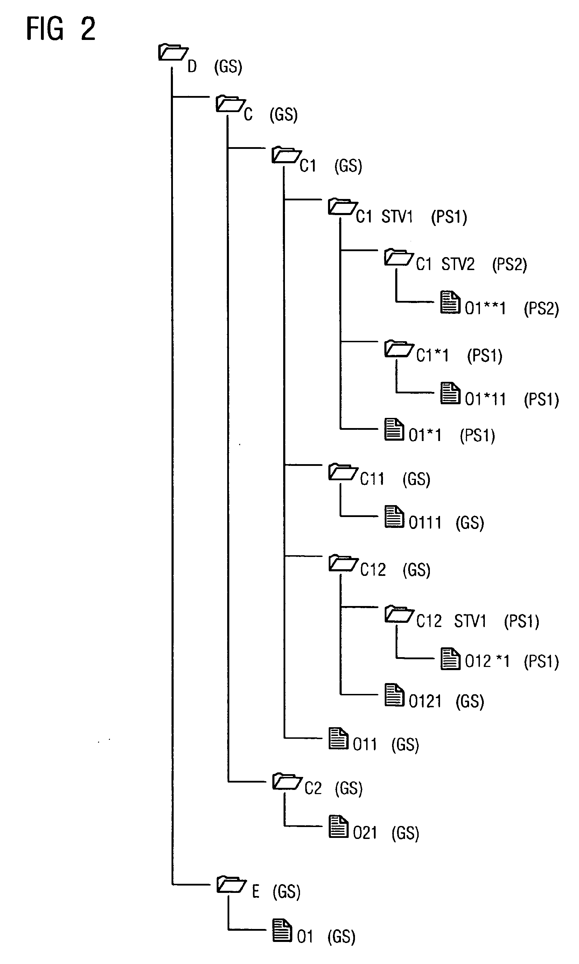

Wie Figur 2 entnommen werden kann, lässt sich die in Figur 1 dargestellte Struktur des Datenbestandes beispielsweise dadurch realisieren, dass dem Datenbehälter C1 in der ersten Parallelstruktur PS1 ein Stellvertreter-Datenbehälter C1 STV1 zugeordnet wird, in welchem das Datenobjekt O1*1 sowie der Datenbehälter C1*1 mit seinem untergeordneten Datenobjekt O1*11 angeordnet sind. Dem Datenbehälter C12 ist in der ersten Parallelstruktur PS1 ein Stellvertreter-Datenbehälter C12 STV2 zugeordnet, in dem das Datenobjekt O12*1 angeordnet ist. Dem Stellvertreter-Datenbehälter C1 STV1 ist in der zweiten Parallelstruktur PS2 ein Stellvertreter-Datenbehälter C1 STV2 zugeordnet, in dem das Datenobjekt O1**1 angeordnet ist. Die übrigen Datenbehälter bzw. Datenobjekte sind auf herkömmliche Art und Weise angeordnet, so dass es einer weiteren Erläuterung hierzu nicht bedarf.

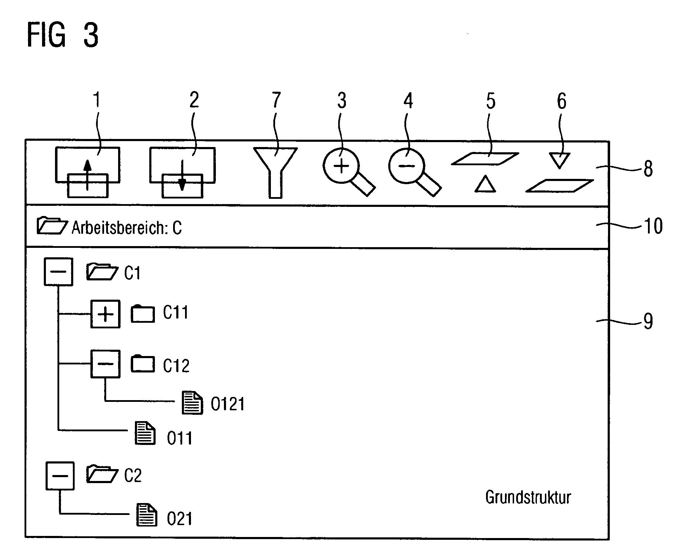

Zur Durchführung des erfindungsgemäßen Verfahrens sind unterschiedliche Bedienelemente erforderlich. Wie Figur 3 entnommen werden kann, können die Bedienelemente als Schaltflächen 1 bis 7 in einer Schaltflächenleiste 8 oberhalb eines Navigationsfensters angeordnet sein. In einem Arbeitsbereichsfenster 10, welches zwischen dem Navigationsfenster 9 und der Schaltflächenleiste 8 angeordnet ist, ist der Datenbehälter C dargestellt, der die Wurzel der im Navigationsfenster 9 dargestellten Baumstruktur bildet.

Mittels der ersten Schaltfläche 1 wird der Bedienschritt "Arbeitsbereich erweitern" eingeleitet. Mittels der zweiten Schaltfläche 2 wird der Bedienschritt "Arbeitsbereich einschränken" eingeleitet. Mittels der dritten Schaltfläche 3 wird der Bedienschritt "untergeordnete Datenbehälter und Datenobjekte der angrenzenden Parallelstruktur eines Datenbehälters einbeziehen" eingeleitet. Mittels der vierten Schaltfläche 4 wird der Bedienschritt "untergeordnete Datenbehälter und Datenobjekte der entferntesten Parallelstruktur eines Datenbehälters ausblenden" eingeleitet. Mittels der fünften Schaltfläche 5 wird der Bedienschritt "Datenbehälter und Datenobjekte der vorhergehenden Parallelstruktur darstellen" eingeleitet. Mittels der sechsten Schaltfläche 6 wird der Bedienschritt "Datenbehälter und Datenobjekte der nächsten Parallelstruktur darstellen" eingeleitet. Mittels der siebten Schaltfläche 7 wird der Bedienschritt "Datenbehälter und/oder Datenobjekte auswählen" eingeleitet.

Die im Navigationsfenster dargestellte Baumstruktur entspricht der Grundstruktur des in den Figuren 1 und 2 dargestellten Datenbestandes. Bei der Darstellung in Figur 3 wurde der Datenbehälter C1 auf herkömmliche Weise durch Mausklick auf die Plus/Minus-Schaltfläche geöffnet. Der dem Datenbehälter C1 untergeordnete Datenbehälter C11 wurde nicht geöffnet. Der dem Datenbehälter C1 untergeordnete Datenbehälter C12 wurde geöffnet, so dass das in ihm vorhandene Datenobjekt O121 sichtbar ist. Ebenfalls ist das im Datenbehälter C1 angeordnete Datenobjekt O11 sichtbar. Der Datenbehälter C2 wurde geöffnet, weshalb das in ihm angeordnete Datenobjekt 021 sichtbar ist. Im Navigationsfenster kann stets auf herkömmliche Art und Weise navigiert werden.

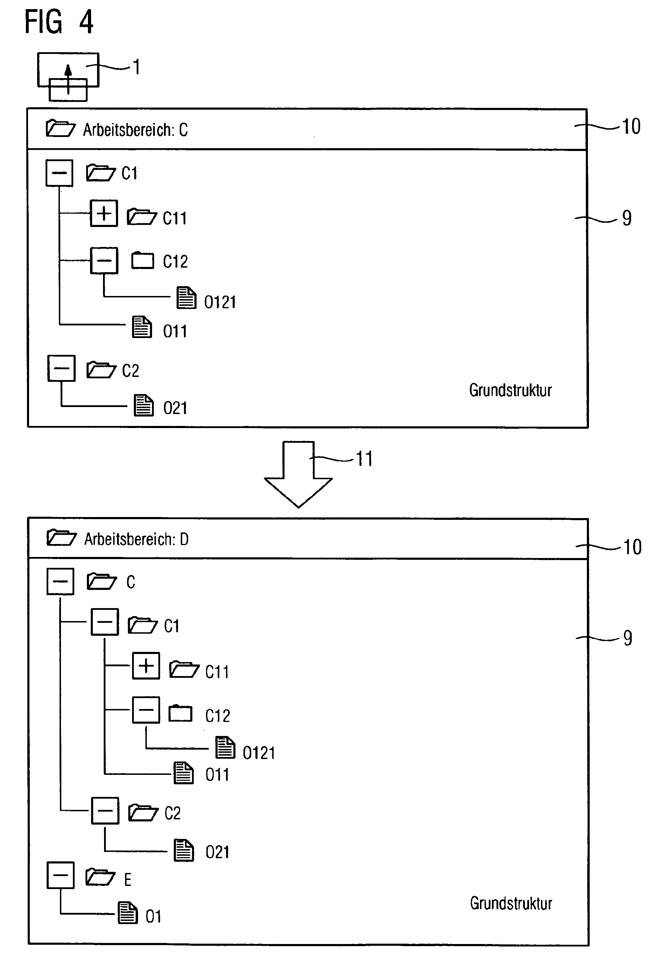

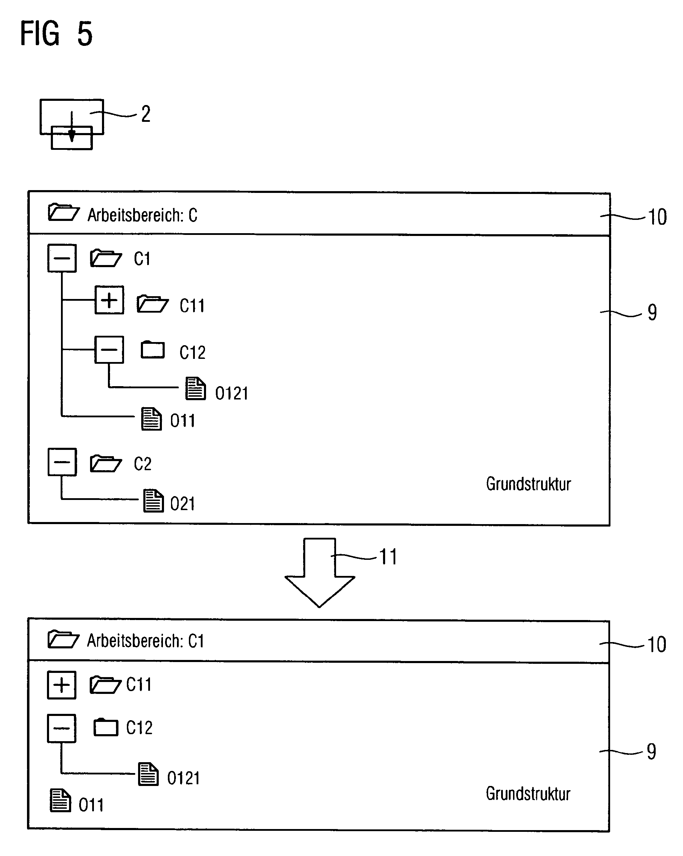

Wie Figur 4 entnommen werden kann, wurde bei der Ausführung des Bedienschritts "Arbeitsbereich erweitern" für die im Navigationsfenster 9 dargestellte Baumstruktur als neue Wurzel der Datenbehälter D gewählt. D. h., im Navigationsfenster 9 ist zusätzlich zu dem Datenbehälter C einschließlich seiner in ihm enthaltenen untergeordneten Datenbehälter und Datenobjekte noch der ebenfalls im Datenobjekt D enthaltene Datenbehälter E mit seinem Datenobjekt O1 dargestellt. Die Durchführung des Bedienschritts wird, wie auch bei den Figuren 5 bis 10, durch einen Pfeil 11 dargestellt.

Wie Figur 5 entnommen werden kann, wird bei Durchführung des Bedienschritts "Arbeitsbereich einschränken" ein untergeordneter Datenbehälter C1 als neue Wurzel genommen. Hierdurch werden die nicht unter den Datenbehälter C1 untergeordneten Datenbehälter und Datenobjekte im Navigationsfenster 9 nicht mehr dargestellt. Wie dem unteren Teil der Figur 5 entnommen werden kann, sind im Navigationsfenster 9 lediglich noch der nicht geöffnete Datenbehälter C11 sowie der geöffnete Datenbehälter C12 mit seinem darin enthaltenen Datenobjekt O121 als auch das im Datenbehälter C1 angeordnete Datenobjekt O11 dargestellt. Der Datenbehälter C2 mit seinem Datenobjekt 021 ist nicht mehr dargestellt.

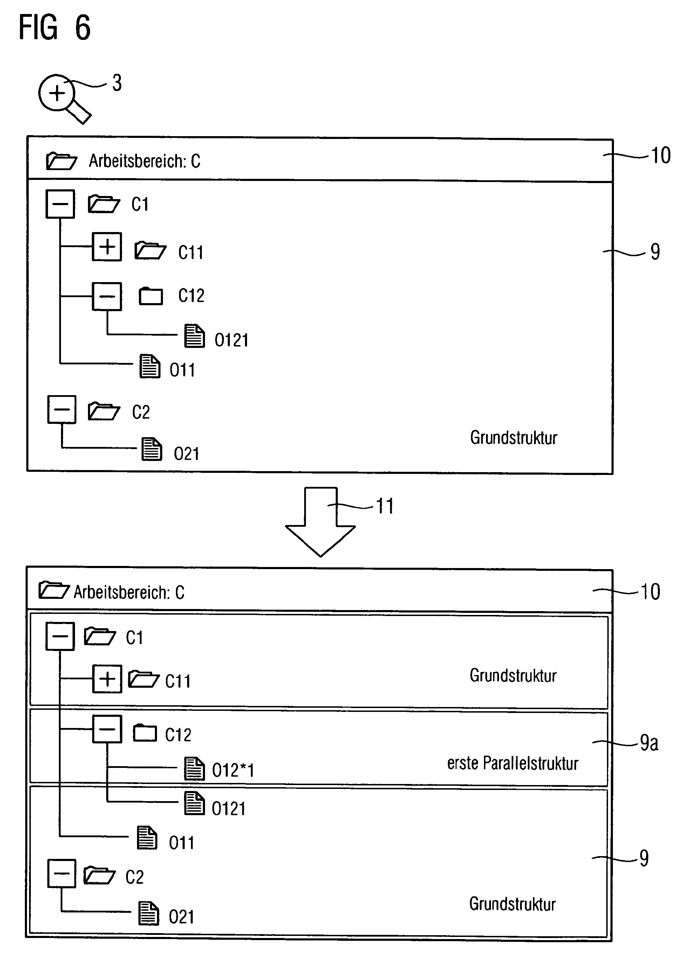

Bei der in Figur 6 dargestellten Durchführung des Bedienschritts "untergeordnete Datenbehälter und Datenobjekte der angrenzenden Parallelstruktur eines Datenbehälters einbeziehen" werden auch die einem Datenbehälter untergeordneten Datenbehälter und Datenobjekte der nächsten Parallelstruktur im Navigationsfenster 9 dargestellt. Durch Anwendung des Bedienschritts "untergeordnete Datenbehälter und Datenobjekte der angrenzenden Parallelstruktur eines Datenbehälters einbeziehen" auf den Datenbehälter C12 wird noch das in der ersten Parallelstruktur PS1 angeordnete Datenobjekt O12*1 im Navigationsfenster 9 dargestellt, wie dies dem unteren Teil der Figur 6 entnommen werden kann. Zur Verdeutlichung, dass sich das Datenobjekt O12*1 in der ersten Parallelstruktur befindet, ist der Bereich 9a des Navigationsfensters 9 beispielsweise durch eine andere Hintergrundfarbe gekennzeichnet.

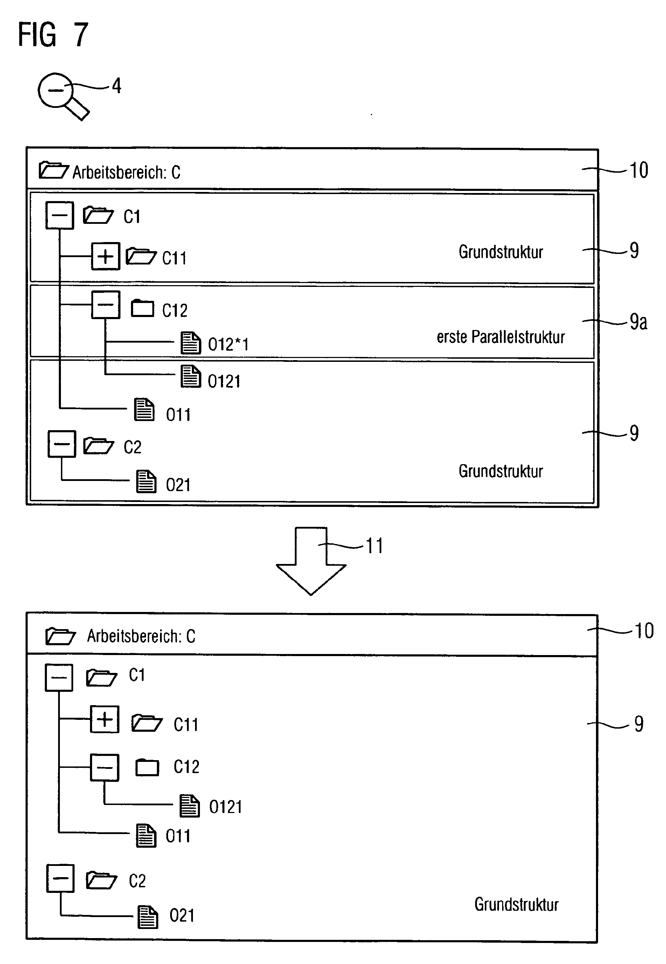

Wie Figur 7 entnommen werden kann, ist die Durchführung des Bedienschritts "untergeordnete Datenbehälter und Datenobjekte der entferntesten Parallelstruktur eines Datenbehälters ausblenden" die Umkehrung des in Figur 6 dargestellten Bedienschritts "untergeordnete Datenbehälter und Datenobjekte der angrenzenden Parallelstruktur eines Datenbehälters einbeziehen". Durch den Bedienschritt "Datenbehälter und Datenobjekte der entferntesten Parallelstruktur eines Datenbehälters ausblenden" wird somit ein vorangegangener Bedienschritt "untergeordnete Datenbehälter und Datenobjekte der angrenzenden Parallelstruktur eines Datenbehälters einbeziehen" wieder rückgängig gemacht. D. h., durch Anwenden des Bedienschritts "untergeordnete Datenbehälter und Datenobjekte der entferntesten Parallelstruktur eines Datenbehälters ausblenden" auf den Datenbehälter C12 wird das in der ersten Parallelstruktur PS1 enthaltene Datenobjekt O12*1 des Datenbehälters C12 nicht mehr im Navigationsfenster 9 dargestellt, wie dies dem unteren Teil der Figur 7 entnommen werden kann.

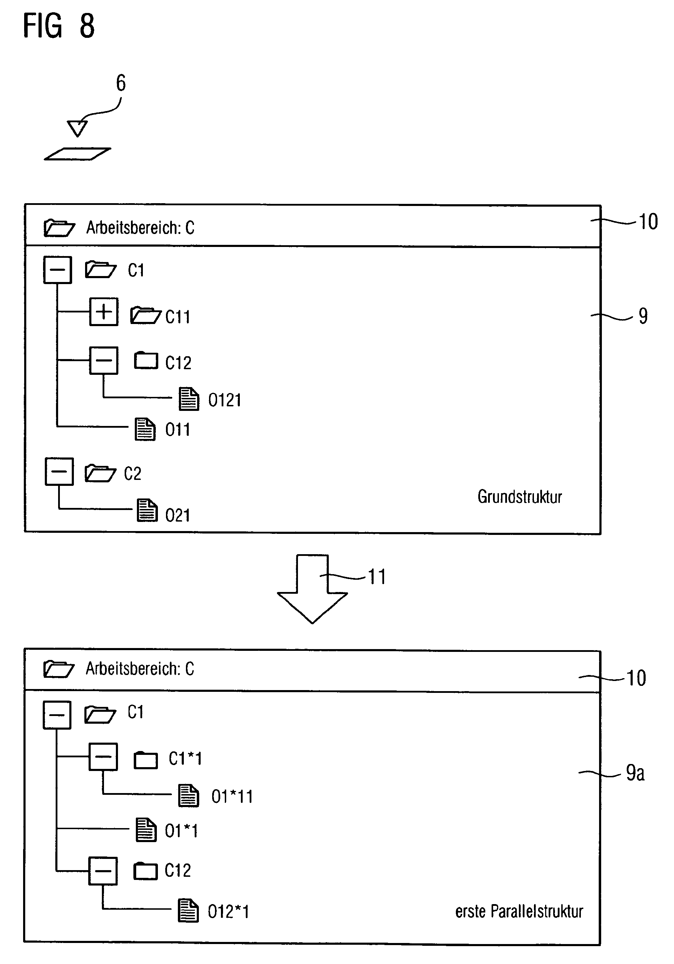

Bei Durchführung des Bedienschritts "Datenbehälter und Datenobjekte der nächstfolgenden Parallelstruktur darstellen" werden alle Datenbehälter und Datenobjekte der auf die im Navigationsfenster 9 dargestellte Struktur nächstfolgenden Parallelstruktur dargestellt. Wie Figur 8 entnommen werden kann, werden ausgehend von dem in Figur 3 dargestellten Arbeitsbereich bei Durchführung des Bedienschritts "Datenbehälter und Datenobjekte der nächstfolgenden Parallelstruktur darstellen" nicht mehr die in dem im oberen Teil der Figur 8 dargestellten Navigationsfenster 9 dargestellten Datenbehälter und Datenobjekte der Grundstruktur dargestellt. Statt dessen werden alle Datenbehälter und alle Datenobjekte der ersten Parallelstruktur PS1 dargestellt, die im aktuellen Arbeitsbereich enthalten sind, d. h. die dem die Wurzel der Baumstruktur bildenden Datenbehälter untergeordnet sind, wie dies in dem im unteren Teil der Figur 8 dargestellten Navigationsfenster 9a zu sehen ist.

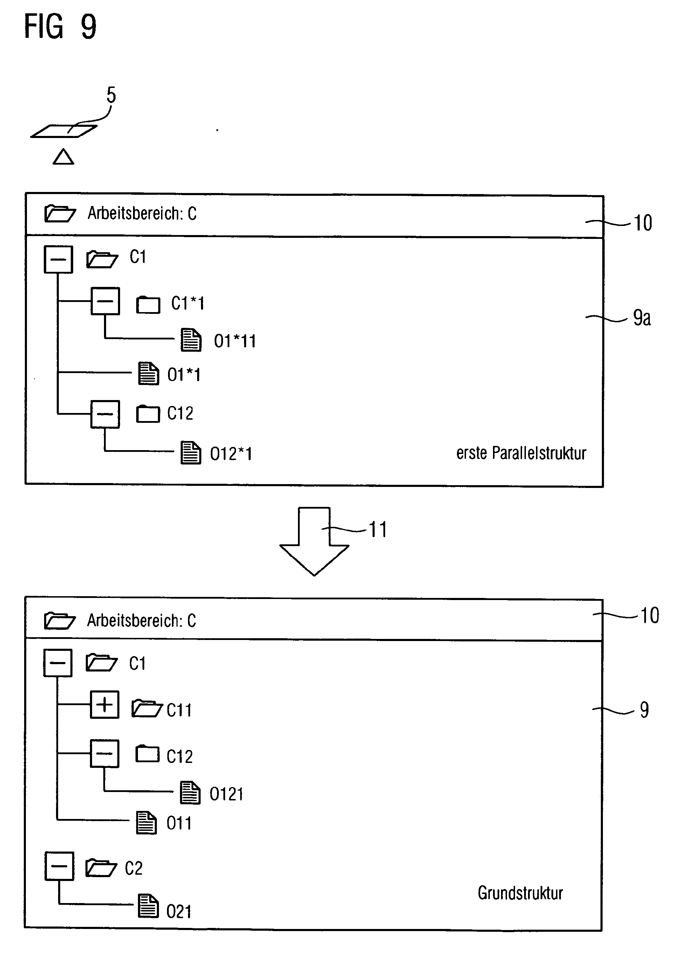

Die in Figur 9 dargestellte Durchführung des Bedienschritts "Datenbehälter und Datenobjekte der vorhergehenden Parallelstruktur darstellen" ist die Umkehrung des Bedienschritts "Datenbehälter und Datenobjekte der nächstfolgenden Parallelstruktur darstellen". Hierdurch werden, ausgehend von der im Navigationsfenster dargestellten ersten Parallelstruktur, nur die in der Grundstruktur angeordneten Datenbehälter und Datenobjekte dargestellt. Jedoch kann die Funktion des Bedienschritts "Datenbehälter und Datenobjekte der vorhergehenden Parallelstruktur darstellen" in vorteilhafter Weise dergestalt realisiert werden, dass nicht nur die Datenbehälter und Datenobjekte der vorhergehenden Parallelstruktur dargestellt werden, sondern auch noch die Datenbehälter und Datenobjekte der aktuellen Parallelstruktur.

Wie Figur 9 entnommen werden kann, sind ausgehend von der in dem im oberen Teil der Figur 9 dargestellten Navigationsfenster 9a enthaltenen Darstellung der ersten Parallelstruktur nach Durchführung des Bedienschritts "Datenbehälter und Datenobjekte der vorhergehenden Parallelstruktur darstellen" die Datenbehälter und Datenobjekte der Grundstruktur im Navigationsfenster 9 dargestellt. Wie bereits erwähnt, könnte die Funktion "Datenbehälter und Datenobjekte der vorhergehenden Parallelstruktur darstellen" aber auch so realisiert sein, dass zusätzlich zu den Datenbehältern und Datenobjekten der Grundstruktur auch noch die Datenbehälter und Datenobjekte der ersten Parallelstruktur dargestellt werden.

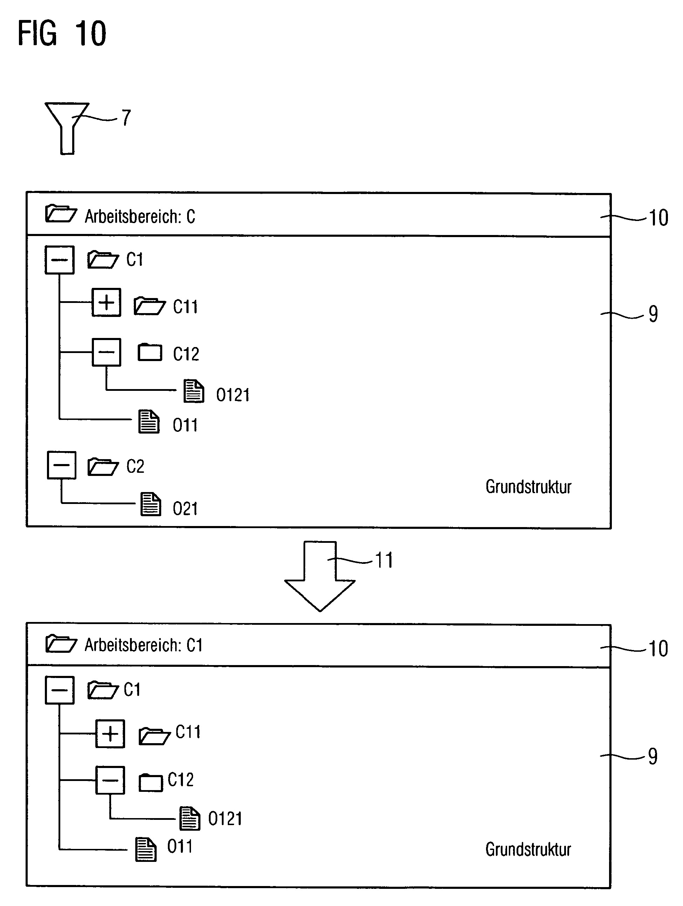

Wie Figur 10 entnommen werden kann, lassen sich mittels des Bedienschritts "Datenbehälter und/oder Datenobjekte auswählen" beliebige Datenbehälter und Datenobjekte von der Darstellung im Navigationsfenster 9 ausschließen. So lässt sich durch Anwendung des Bedienschritts "Datenbehälter und/oder Datenobjekte auswählen" auf den Datenbehälter C1 der Datenbehälter C2 mit seinem in ihm enthaltenen Datenobjekt 021 von der Darstellung im Navigationsfenster 9 ausschließen, wie dies dem unteren Teil der Figur 10 entnommen werden kann.

### Bezugszeichenliste

- C, C1, C2, C11, C12, C1*1, D, E: Datenbehälter
- C1 STV1, C1 STV2, C12 STV2: Stellvertreter-Datenbehälter
- GS: Grundstruktur
- O1, O11, O1*1, O1*11, O12, O121, O12*1: Datenobjekt
- PS1: erste Parallelstruktur
- PS2: zweite Parallelstruktur
- 1 bis 7: Bedienelemente
- 8: Schaltflächenleiste
- 9: Navigationsfenster
- 10: Arbeitsbereichsfenster

## Patentansprüche

1. Verfahren zur Navigation in einem hierarchisch organisierten und in Datenbehältern angeordnete Datenobjekte aufweisenden Datenbestand, bei welchem die Datenbehälter und die Datenobjekte ausgehend von einer Wurzel in einer Baumstruktur dargestellt sind, **dadurch gekennzeichnet, dass** ein beliebiger Datenbehälter als Wurzel bestimmbar ist.

2. Verfahren nach Anspruch 1, **dadurch gekennzeichnet, dass** Datenbehälter und/oder Datenobjekte in der Darstellung unterdrückbar sind.

3. Verfahren nach Anspruch 2, **dadurch gekennzeichnet, dass** die Unterdrückung für jeden Datenbehälter und/oder für jedes Datenobjekt individuell frei wählbar ist.

4. Verfahren nach Anspruch 2, **dadurch gekennzeichnet, dass** die Unterdrückung mittels eines individuell frei wählbaren Kriteriums erfolgt, welches eine Mehrzahl von Datenbehältern und/oder Datenobjekten betreffen kann.

5. Verfahren nach einem der Ansprüche 1 bis 4, **dadurch gekennzeichnet, dass** Datenbehälter und/oder Datenobjekte von der Bestimmbarkeit bzw. Wählbarkeit ausnehmbar sind.

6. Verfahren nach einem der Ansprüche 1 bis 5, **dadurch gekennzeichnet, dass** die Datenorganisation neben den Hierarchieebenen wenigstens noch eine hierarchisch angeordnete Parallelstruktur enthält.
